# EUROPEAN PATENT APPLICATION

(11) **EP 3 719 068 A1**
(43) Date of publication of application: **07.10.2020**
(21) Application number: 20163280.9
(22) Date of filing: 16.03.2020
(51) Int. Cl.: C08L 7/00, B60C 1/00, C08K 3/04, C08K 3/36, C08K 5/548, C08L 9/00, C08L 9/06, C08L 45/02, C08L 91/00

(54) **RUBBER COMPOSITION FOR TIRE TREAD AND TIRE**

(30) Priority: 03.04.2019 JP 2019071294
(71) Applicant: SUMITOMO RUBBER INDUSTRIES, LTD., Chuo-ku Kobe-shi Hyogo 651-0072 (JP)
(72) Inventor: SOFUE, Naoya, Chuo-ku, Kobe-shi,, Hyogo 651-0072 (JP)
(74) Representative: TBK

(57) **Abstract**

Provided are a rubber composition and a tire having improved combined performance of low fuel consumption performance, high-temperature dry grip performance, and low-temperature dry grip performance. A rubber composition for a tire tread contains: a rubber component including 60% by mass or greater of a styrene-butadiene rubber or having a total styrene content not less than 20% by mass; 100 parts by mass or greater of silica per 100 parts by mass of the rubber component; a protected mercaptosilane; 5 to 60 parts by mass of a resin having a softening point not lower than 30°C per 100 parts by mass of the rubber component; and 10 to 55 parts by mass of a liquid plasticizer per 100 parts by mass of the rubber component, wherein a total amount of a plasticizer per 100 parts by mass of the rubber component is 30 to 100 parts by mass.

## Description

### BACKGROUND OF THE INVENTION

### Field of the Invention

The present invention relates to a rubber composition for a tire tread and a tire.

### Description of the Background Art

Conventionally, tires have been required to have various kinds of performance, and grip performance has been regarded as important from the viewpoint of safety (see, for example, Japanese Laid-Open Patent Publication No. 2008-214377). However, there is room for improvement in improving combined performance of low fuel consumption performance, high-temperature dry grip performance, and low-temperature dry grip performance.

### SUMMARY OF THE INVENTION

The present invention has been made to solve the above-described problem, and an object of the present invention is to provide a rubber composition and a tire having improved combined performance of low fuel consumption performance, high-temperature dry grip performance, and low-temperature dry grip performance.

The present invention is directed to a rubber composition for a tire tread, containing:
a rubber component including 60% by mass or greater of a styrene-butadiene rubber or a rubber component having a total styrene content not less than 20% by mass;
100 parts by mass or greater of silica per 100 parts by mass of the rubber component;
a protected mercaptosilane;
5 to 60 parts by mass of a resin having a softening point not lower than 30°C per 100 parts by mass of the rubber component; and
10 to 55 parts by mass of a liquid plasticizer per 100 parts by mass of the rubber component, wherein
a total amount of a plasticizer per 100 parts by mass of the rubber component is 30 to 100 parts by mass.

The rubber composition preferably contains a carbon black having an average particle diameter not greater than 20 nm and/or a nitrogen adsorption specific surface area not less than 125 m²/g.

In the rubber composition, the silica preferably has a nitrogen adsorption specific surface area not less than 200 m²/g.

The rubber composition preferably contains a styrene-butadiene rubber having a styrene content not greater than 10% by mass.

The rubber composition preferably contains a butadiene rubber and an isoprene-based rubber.

In the rubber composition, the protected mercaptosilane is preferably a compound represented by the following formula (I), 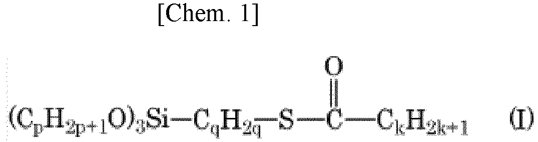 (in formula (I), p is an integer from 1 to 3, q is an integer from 1 to 5, and k is an integer from 5 to 12.).

The present invention is also directed to a tire including a tread for which the rubber composition is used.

According to the present invention, combined performance of low fuel consumption performance, high-temperature dry grip performance, and low-temperature dry grip performance is improved since the rubber composition for a tire tread contains: a rubber component including 60% by mass or greater of a styrene-butadiene rubber or a rubber component having a total styrene content not less than 20% by mass; 100 parts by mass or greater of silica per 100 parts by mass of the rubber component; a protected mercaptosilane; 5 to 60 parts by mass of a resin having a softening point not lower than 30°C per 100 parts by mass of the rubber component; and 10 to 55 parts by mass of a liquid plasticizer per 100 parts by mass of the rubber component, wherein a total amount of a plasticizer per 100 parts by mass of the rubber component is 30 to 100 parts by mass.

### DESCRIPTION OF THE PREFERRED EMBODIMENTS

The rubber composition for a tire tread of the present invention contains:
a rubber component including 60% by mass or greater of a styrene-butadiene rubber or a rubber component having a total styrene content not less than 20% by mass;
100 parts by mass or greater of silica per 100 parts by mass of the rubber component;
a protected mercaptosilane;
5 to 60 parts by mass of a resin having a softening point not lower than 30°C per 100 parts by mass of the rubber component; and
10 to 55 parts by mass of a liquid plasticizer per 100 parts by mass of the rubber component, wherein
a total amount of a plasticizer per 100 parts by mass of the rubber component is 30 to 100 parts by mass. Accordingly, combined performance of low fuel consumption performance, high-temperature dry grip performance, and low-temperature dry grip performance is improved.

The reason why such an advantageous effect is achieved is not necessarily clear but is inferred as described below.

By blending a large amount (preferably, 100 parts by mass or greater) of a filler into a rubber, it is possible to increase tan8 of the rubber, and further improvement of low fuel consumption performance, high-temperature dry grip performance, and low-temperature dry grip performance is expected if the filler is silica. Here, when silica is blended alone, the silica aggregates and does not become dispersed in the rubber composition. Thus, it is necessary to add a silane coupling agent together with the silica.

When silica is blended in a large amount (100 parts by mass or greater), if a sulfide-based silane coupling agent, which is generally used in a rubber composition for a tire, is used, sufficient dispersion of the silica cannot be ensured due to low reactivity of the sulfide-based silane coupling agent. However, by using silica in combination with a protected mercaptosilane which has high reactivity, sufficient dispersion of the silica can be ensured. As a result, high reinforcement performance can be ensured, and good high-temperature dry grip performance and low-temperature dry grip performance are achieved.

Furthermore, when a specific amount of a resin having a specific softening point and a specific amount of a liquid plasticizer coexist with the large amount of the silica and the protected mercaptosilane, the resin and the liquid plasticizer that are partially melted during kneading serve as lubricating oil, so that the dispersibility of the silica is further improved, and energy loss is also obtained. As a result, the above effect is more suitably achieved. Furthermore, by setting a total amount of a plasticizer to a specific amount, the above effect is further suitably achieved.

Moreover, by using a rubber component having a high styrene content, an energy loss effect due to steric hindrance of styrene is obtained, and further improvement of high-temperature dry grip performance and low-temperature dry grip performance is expected.

In the present invention, by using a large amount of silica and a protected mercaptosilane in combination, causing a specific amount of a resin having a specific softening point and a specific amount of the liquid plasticizer to coexist with the rubber component having a high styrene content, and setting a total amount of a plasticizer to a specific amount, these components act synergistically to improve combined performance of low fuel consumption performance, high-temperature dry grip performance, and low-temperature dry grip performance.

In particular, in a rubber composition in which a specific amount of a resin having a specific softening point and a specific amount of a liquid plasticizer are caused to coexist with a rubber component having a high styrene content and a total amount of a plasticizer is a specific amount, by using a large amount of silica and a protected mercaptosilane in combination, combined performance of low fuel consumption performance, high-temperature dry grip performance, and low-temperature dry grip performance can be synergistically improved, and good combined performance of low fuel consumption performance, high-temperature dry grip performance, and low-temperature dry grip performance is achieved.

In the present specification, high-temperature dry grip performance and low-temperature dry grip performance are also collectively referred to as grip performance or dry grip performance.

Examples of the rubber component that can be used in the rubber composition include diene-based rubbers.

Examples of diene-based rubbers include isoprene-based rubber, butadiene rubber (BR), styrene-butadiene rubber (SBR), styrene-isoprene-butadiene rubber (SIBR), ethylenepropylene-diene rubber (EPDM), chloroprene rubber (CR), and acrylonitrile butadiene rubber (NBR). In addition, examples of a rubber component other than the above rubbers include butyl-based rubber and fluorine rubber. These rubbers may be used individually, or two or more of these rubbers may be used in combination. Among them, SBR is preferable.

In addition, BR is preferably used in combination with SBR. Accordingly, the effect is more suitably achieved.

Furthermore, BR and isoprene-based rubber are preferably used in combination with SBR. Accordingly, the effect is further suitably achieved. It is inferred that this is because the isoprene-based rubber does not take in silica, thus, the silica concentration of the SBR/BR phase, which is dominant in viscoelastic properties (tan8, etc.), is increased, and a higher heat generation/higher strength SBR phase is locally formed.

Here, the rubber component is a rubber having a weight-average molecular weight (Mw) of preferably not less than 200 thousand and more preferably not less than 350 thousand. The upper limit of the Mw is not particularly limited, but the Mw is preferably not greater than 4 million and more preferably not greater than 3 million.

In the present specification, the Mw and a number-average molecular weight (Mn) can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The amount of the diene-based rubber in 100% by mass of the rubber component is preferably not less than 20% by mass, more preferably not less than 50% by mass, further preferably not less than 70% by mass, particularly preferably not less than 80% by mass, and most preferably not less than 90% by mass, and may be 100% by mass. When the amount is within the above range, the effect tends to be more favorably achieved.

The rubber component may be an unmodified diene-based rubber, or may be a modified diene-based rubber.

The modified diene-based rubber only needs to be a diene-based rubber having a functional group that interacts with a filler such as silica, and examples of such a modified diene-based rubber include a terminal-modified diene-based rubber obtained by modifying at least one terminal of a diene-based rubber with a compound (modifier) having the functional group (a terminal-modified diene-based rubber having the functional group at a terminal thereof), a main chain-modified diene-based rubber having the functional group in the main chain thereof, a main chain/terminal-modified diene-based rubber having the functional group in the main chain and at a terminal thereof (for example, a main chain/terminal-modified diene-based rubber that has the functional group in the main chain thereof and in which at least one terminal thereof is modified with the modifier), and a terminal-modified diene-based rubber that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

The SBR is not particularly limited, and, for example, an emulsion-polymerized styrene-butadiene rubber (E-SBR), a solution-polymerized styrene-butadiene rubber (S-SBR), and the like can be used. These rubbers may be used individually, or two or more of these rubbers may be used in combination.

The styrene content of the SBR is preferably not less than 5% by mass, more preferably not less than 10% by mass, further preferably not less than 15% by mass, particularly preferably not less than 20% by mass, most preferably not less than 25% by mass, even most preferably not less than 30% by mass, and further most preferably not less than 35% by mass. In addition, the styrene content is preferably not greater than 60% by mass, more preferably not greater than 50% by mass, and further preferably not greater than 45% by mass. When the styrene content is within the above range, the effect tends to be more favorably achieved.

In the present specification, the styrene content of the SBR is calculated by ¹H-NMR measurement.

As the SBR, for example, SBRs manufactured by and available from Sumitomo Chemical Co., Ltd., JSR Corporation, Asahi Kasei Corporation, Zeon Corporation, etc., can be used.

The SBR may be an unmodified SBR, or may be a modified SBR. Examples of the modified SBR include modified SBRs in which a functional group that is the same as that in the modified diene-based rubber is introduced. Among them, modified SBRs are preferable.

The BR is not particularly limited, and a high-cis BR having a high cis content, a BR containing syndiotactic polybutadiene crystal, a BR synthesized using a rare earth-based catalyst (a rare earth BR), etc., can be used. These BRs may be used individually, or two or more of these BRs may be used in combination.

The trans content of the BR is preferably not less than 45% by mass and more preferably not less than 50% by mass. In addition, the trans content is preferably not greater than 70% by mass, more preferably not greater than 60% by mass, and further preferably not greater than 55% by mass. When the trans content is within the above range, the effect tends to be more favorably achieved.

The vinyl content of the BR is preferably not greater than 20% by mass and more preferably not greater than 15% by mass. In addition, the vinyl content is preferably not less than 5% by mass and more preferably not less than 10% by mass. When the vinyl content is within the above range, the effect tends to be more favorably achieved.

The cis content of the BR is preferably not less than 20% by mass and more preferably not less than 30% by mass. In addition, the cis content is preferably not greater than 50% by mass and more preferably not greater than 40% by mass. When the cis content is within the above range, the effect tends to be more favorably achieved.

In the present specification, the cis content, the trans content, and the vinyl content can be measured by infrared absorption spectrometry.

In addition, the BR may be an unmodified BR, or may be a modified BR. Examples of the modified BR include modified BRs in which a functional group that is the same as that in the modified diene-based rubber is introduced. Among them, modified BRs are preferable.

As the BR, products of Ube Industries, Ltd., JSR Corporation, Asahi Kasei Corporation, Zeon Corporation, etc., can be used.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20 can be used. The IR is not particularly limited, and, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among them, NR is preferable.

The rubber composition contains a rubber component including 60% by mass or greater of an SBR or a rubber component having a total styrene content not less than 20% by mass. That is, it is sufficient that the rubber composition contains a rubber component in which styrene is present in a relatively large amount. For example, the rubber component may contain 60% by mass or greater of an SBR, or may have a total styrene content not less than 20% by mass. Accordingly, the above effect (particularly, an effect of improving dry grip performance) is achieved.

The amount of the SBR in 100% by mass of the rubber component is preferably not less than 60% by mass, more preferably not less than 70% by mass, and further preferably not less than 80% by mass, and may be 100% by mass, but is preferably not greater than 95% by mass and more preferably not greater than 85% by mass. When the amount is within the above range, the effect tends to be more favorably achieved.

As a part or the entirety of the SBR (preferably as a part of the SBR), an SBR having a styrene content not greater than 10% by mass is also preferably included.

Accordingly, low fuel consumption performance can be more suitably improved. The lower limit of the styrene content of the SBR is not particularly limited, but the styrene content is preferably not less than 5% by mass and more preferably not less than 8% by mass.

The amount of the "SBR having a styrene content not greater than 10% by mass" in 100% by mass of the rubber component is preferably not less than 5% by mass, more preferably not less than 10% by mass, and further preferably not less than 20% by mass, and is preferably not greater than 50% by mass and more preferably not greater than 40% by mass. When the amount is within the above range, the effect tends to be more favorably achieved.

The amount of the BR in 100% by mass of the rubber component is preferably not less than 5% by mass and more preferably not less than 15% by mass, and is preferably not greater than 40% by mass and more preferably not greater than 30% by mass. When the amount is within the above range, the effect tends to be more favorably achieved.

The amount of the isoprene-based rubber in 100% by mass of the rubber component is preferably not less than 5% by mass and more preferably not less than 8% by mass, and is preferably not greater than 30% by mass and more preferably not greater than 15% by mass. When the amount is within the above range, the effect tends to be more favorably achieved.

The total styrene content in the rubber component is preferably not less than 20% by mass, more preferably not less than 25% by mass, and further preferably not less than 30% by mass, and is preferably not greater than 50% by mass, more preferably not greater than 45% by mass, and further preferably not greater than 40% by mass. When the total styrene content is within the above range, the effect tends to be more favorably achieved.

The rubber composition contains silica as a filler (reinforcing filler).

The silica is not particularly limited, and examples of the silica include dry-process silica (silicic anhydride) and wet-process silica (hydrous silicic acid). These types of silica may be used individually, or two or more of these types of silica may be used in combination. Among them, wet-process silica is preferable for the reason that it has a higher silanol group content.

As the silica, for example, products of Degussa, Rhodia, Tosoh Silica Corporation, Solvay Japan, Ltd., Tokuyama Corporation, etc., can be used.

The nitrogen adsorption specific surface area (N₂SA) of the silica is preferably not less than 50 m²/g, more preferably not less than 150 m²/g, and further preferably not less than 200 m²/g. In addition, the N₂SA is preferably not greater than 300 m²/g and more preferably not greater than 250 m²/g. When the N₂SA is within the above range, the effect tends to be more favorably achieved.

By blending a silica having an N₂SA not less than 200 m²/g, the above effect (particularly, effects of improving high-temperature dry grip performance and low-temperature dry grip performance) is more suitably achieved.

The N₂SA of the silica can be measured according to ASTM D3037-81.

The amount of the silica per 100 parts by mass of the rubber component is not less than 100 parts by mass, preferably not less than 105 parts by mass, more preferably not less than 110 parts by mass, further preferably not less than 120 parts by mass, and particularly preferably not less than 130 parts by mass. Accordingly, the above effect (particularly, effects of improving high-temperature dry grip performance and low-temperature dry grip performance) is achieved. The amount is preferably not greater than 180 parts by mass, more preferably not greater than 170 parts by mass, further preferably not greater than 160 parts by mass, and particularly preferably not greater than 150 parts by mass. When the amount is within the above range, the effect tends to be more favorably achieved.

The rubber composition contains a protected mercaptosilane. Accordingly, the above effect (particularly, effects of improving high-temperature dry grip performance and low-temperature dry grip performance) is achieved.

In the present specification, the protected mercaptosilane refers to a silicon compound having a protected mercapto group. Here, the protected mercapto group refers to a group obtained by substituting the hydrogen atom of a mercapto group (-SH group) with another atom or atomic group.

The protected mercaptosilane is not particularly limited, and examples of the protected mercaptosilane include compounds each obtained by substituting the hydrogen atom of the mercapto group (-SH group) of a mercapto-based silane coupling agent, such as 3-mercaptopropyltrimethoxysilane, 3-mercaptopropyltriethoxysilane, 3-mercaptopropylmethyldimethoxysilane, 3-mercaptopropylmethyldiethoxysilane, 3-mercaptopropyldimethylmethoxysilane, 3-mercaptopropyldimethylethoxysilane, 2-mercaptoethyltrimethoxysilane, 2-mercaptoethyltriethoxysilane, 2-mercaptoethylmethyldimethoxysilane, 2-mercaptoethylmethyldiethoxysilane, 2-mercaptoethyldimethylmethoxysilane, and 2-mercaptoethyldimethylethoxysilane, with another atom or atomic group. These compounds may be used individually, or two or more of these compounds may be used in combination.

As the protected mercaptosilane, a compound represented by the following formula (I) is preferably used. Accordingly, the effect tends to be more favorably achieved. 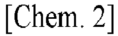 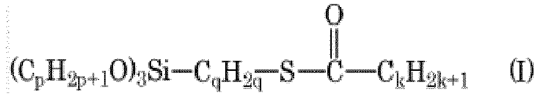 (in formula (I), p is an integer from 1 to 3, q is an integer from 1 to 5, and k is an integer from 5 to 12.)

In formula (I), although p is an integer from 1 to 3, p is preferably 2.

Although q is an integer from 1 to 5, q is preferably not less than 2, preferably not greater than 4, and more preferably 3.

Although k is an integer from 5 to 12, k is preferably not less than 6, preferably not greater than 10, more preferably not greater than 8, and further preferably 7.

When p, q, and k are within the above ranges, the effect tends to be more favorably achieved.

Examples of the silane coupling agent represented by formula (I) include 3-octanoylthio-1-propyltriethoxysilane and 3-propionylthiopropyltrimethoxysilane.

The amount of the protected mercaptosilane per 100 parts by mass of the silica is preferably not less than 3 parts by mass and more preferably not less than 5 parts by mass, and is preferably not greater than 20 parts by mass, more preferably not greater than 15 parts by mass, and further preferably not greater than 12 parts by mass. When the amount is within the above range, the effect tends to be more favorably achieved.

The rubber composition may contain a silane coupling agent other than the protected mercaptosilane, together with the protected mercaptosilane.

The silane coupling agent other than the protected mercaptosilane is not particularly limited, and examples of such a silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. These silane coupling agents may be used individually, or two or more of these silane coupling agents may be used in combination.

As the protected mercaptosilane and the silane coupling agent other than the protected mercaptosilane, for example, products of Degussa, Momentive, Shin-Etsu Silicones, Tokyo Chemical Industry Co., Ltd., AZmax, Dow Corning Toray Co., Ltd., etc., can be used.

The rubber composition preferably contains carbon black as a filler (reinforcing filler). Accordingly, the effect is more suitably achieved.

Examples of the carbon black include N134, N110, N220, N234, N219, N339 N330, N326, N351, N550, and N762. These carbon blacks may be used individually, or two or more of these carbon blacks may be used in combination.

The nitrogen adsorption specific surface area (N₂SA) of the carbon black is preferably not less than 80 m²/g, more preferably not less than 110 m²/g, further preferably not less than 125 m²/g, and particularly preferably not less than 135 m²/g. In addition, the N₂SA is preferably not greater than 200 m²/g, more preferably not greater than 170 m²/g, and further preferably not greater than 155 m²/g. When the amount is within the above range, the effect tends to be more favorably achieved.

The nitrogen adsorption specific surface area of the carbon black is obtained according to JIS K6217-2: 2001.

The dibutyl phthalate absorption amount (DBP) of the carbon black is preferably not less than 50 ml/100 g and more preferably not less than 100 ml/100 g. In addition, the DBP is preferably not greater than 200 ml/100 g and more preferably not greater than 135 ml/100 g. When the amount is within the above range, the effect tends to be more favorably achieved.

The DBP of the carbon black can be measured according to JIS-K6217-4: 2001.

The average particle diameter of the carbon black is preferably not greater than 25 nm, more preferably not greater than 23 nm, and further preferably not greater than 20 nm. The lower limit of the average particle diameter is not particularly limited, but the average particle diameter is preferably not less than 8 nm, more preferably not less than 10 nm, further preferably not less than 12 nm, and particularly preferably not less than 14 nm. When the amount is within the above range, the effect tends to be more favorably achieved.

The average particle diameter of the carbon black is a number average particle diameter and is measured with a transmission electron microscope.

The rubber composition preferably contains a carbon black having an average particle diameter not greater than 20 nm and/or a nitrogen adsorption specific surface area not less than 125 m²/g, and more preferably contains a carbon black having an average particle diameter not greater than 20 nm and a nitrogen adsorption specific surface area not less than 125 m²/g. Accordingly, the above effect (particularly, effects of improving high-temperature dry grip performance and low-temperature dry grip performance) is more suitably achieved.

As the carbon black, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The amount of the carbon black per 100 parts by mass of the rubber component is preferably not less than 3 parts by mass and more preferably not less than 5 parts by mass. The amount is preferably not greater than 40 parts by mass, more preferably not greater than 30 parts by mass, further preferably not greater than 20 parts by mass, and particularly preferably not greater than 10 parts by mass. When the amount is within the above range, the effect tends to be more favorably achieved.

The rubber composition contains a plasticizer.

In the present specification, the plasticizer is a material that imparts plasticity to the rubber component, and conceptually includes a liquid plasticizer (plasticizer that is liquid (in liquid form) at 25°C) and a solid plasticizer (plasticizer that is solid at 25°C). Specifically, the plasticizer is a component that can be extracted from the rubber composition using acetone. These plasticizers may be used individually, or two or more of these plasticizers may be used in combination.

The total amount of the plasticizer (the total amount of the liquid plasticizer and the solid plasticizer) per 100 parts by mass of the rubber component is not less than 30 parts by mass, preferably not less than 40 parts by mass, more preferably not less than 45 parts by mass, and further preferably not less than 55 parts by mass, and is not greater than 100 parts by mass, preferably not greater than 90 parts by mass, more preferably not greater than 80 parts by mass, and further preferably not greater than 75 parts by mass. When the amount is within the above range, the effect tends to be more favorably achieved.

The amount of the plasticizer also includes the amount of oil contained in rubber (oil-extended rubber) and sulfur (oil-containing sulfur).

Examples of the liquid plasticizer include oils, liquid polymers (diene-based, olefin-based, ester-based, etc.), liquid resins, essential oils derived from natural products such as turpentine oil, and ester-based plasticizers. Examples of the solid plasticizer include solid resins that are in solid form (solid) at 25°C and that are generally used in the tire industry. These plasticizers may be used individually, or two or more of these plasticizers may be used in combination. Among them, as the liquid plasticizer, at least one member selected from the group consisting of oils, liquid polymers, and liquid resins is preferable, oils are more preferable, and process oils are further preferable.

The oils are not particularly limited, and conventionally known oils including process oils such as paraffinic process oil, aromatic process oil, and naphthenic process oil, low-PCA (polycyclic aromatic) process oils such as TDAE and MES, vegetable fats and oils, mixtures thereof, etc., can be used. These oils may be used individually, or two or more of these oils may be used in combination. Among them, aromatic process oil is preferable.

As the oil, for example, products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., etc., can be used.

Examples of the liquid resin include terpene-based resins (including terpene phenol resins and aromatic modified terpene resins), rosin resins, styrene-based resins, C5-based resins, C5C9-based resins, coumarone-indene-based resins (including coumarone resins and indene resins), olefin-based resins, polyurethane resins, and acrylic resins that are in liquid form at 25°C.

As the liquid resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

Examples of liquid diene-based polymers include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), and liquid styrene-isoprene-styrene block copolymers (liquid SIS block polymers) that are in liquid form at 25°C. The terminals and the main chains of these polymers may be modified by polar groups.

As the liquid diene-based polymer, for example, products of Sartomer, KURARAY CO., LTD., etc., can be used.

The amount of the liquid plasticizer (preferably, an oil) per 100 parts by mass of the rubber component is not less than 10 parts by mass, preferably not less than 20 parts by mass, more preferably not less than 25 parts by mass, and further preferably not less than 30 parts by mass, and is not greater than 55 parts by mass, preferably not greater than 50 parts by mass, more preferably not greater than 45 parts by mass, and further preferably not greater than 40 parts by mass. When the amount is within the above range, the effect tends to be more favorably achieved.

The amount of the liquid plasticizer also includes the amount of oil contained in rubber (oil-extended rubber) and sulfur (oil-containing sulfur).

As the solid plasticizer, solid resins (resins) that are generally used as tire ingredients can be used. Specific examples of the solid plasticizer include resins such as terpene-based resins, rosin resins, styrene-based resins, olefin-based resins, C5-based resins, C9-based resins, C5/C9-based resins, coumarone-based resins, indene-based resins, coumarone-indene-based resins, acrylic resins, and urethane resins. One of these resins may be used alone, a mixture of two or more of these resins may be used, or each of these resins may be obtained by copolymerizing a plurality of monomer components. Among them, styrene-based resins are preferable.

As the resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

The softening point of the resin is preferably not lower than 30°C, more preferably not lower than 50°C, and further preferably not lower than 80°C, and is preferably not higher than 200°C, more preferably not higher than 160°C, further preferably not higher than 140°C, and particularly preferably not higher than 120°C. When the softening point is set to be within the above range, the effect tends to be more suitably achieved.

In the present specification, the softening point of the resin is a softening point that is measured with a ring and ball softening point measuring device according to JIS K6220-1: 2001 and that is a temperature at which a ball has descended.

The styrene-based resins are each a polymer for which a styrene-based monomer is used as a constituent monomer, and examples of the styrene-based resins include a polymer obtained by polymerization with a styrene-based monomer as a main component (not less than 50% by mass, preferably not less than 80% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; α, β-unsaturated carboxylic acids or acid anhydrides thereof such as maleic anhydride; and the like.

Among them, α-methylstyrene-based resins (a-methylstyrene homopolymers, copolymers of α-methylstyrene and styrene, etc.) are preferable, and copolymers of a-methylstyrene and styrene are more preferable.

The amount of the solid plasticizer (preferably, a resin) per 100 parts by mass of the rubber component is not less than 5 parts by mass, preferably not less than 10 parts by mass, more preferably not less than 15 parts by mass, and further preferably not less than 20 parts by mass, and is not greater than 60 parts by mass, preferably not greater than 50 parts by mass, more preferably not greater than 45 parts by mass, and further preferably not greater than 40 parts by mass. When the amount is set to be within the above range, the effect (particularly, effects of improving high-temperature dry grip performance and low-temperature dry grip performance) tends to be more suitably achieved.

The rubber composition preferably contains sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The amount of the sulfur per 100 parts by mass of the rubber component is preferably not less than 0.1 parts by mass, more preferably not less than 0.5 parts by mass, and further preferably not less than 1 part by mass. In addition, the amount is preferably not greater than 10 parts by mass, more preferably not greater than 7 parts by mass, further preferably not greater than 5 parts by mass, particularly preferably not greater than 3 parts by mass, and most preferably not greater than 2 parts by mass. When the amount is within the above range, the effect tends to be more favorably achieved.

The rubber composition preferably contains a vulcanization accelerator.

Examples of the vulcanization accelerator include: thiazole-based vulcanization accelerators such as 2-mercaptobenzothiazole and di-2-benzothiazolyl disulfide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazolyl sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable, and a sulfenamide-based vulcanization accelerator and a guanidine-based vulcanization accelerator are more preferably used in combination.

As the vulcanization accelerator, for example, products manufactured by Kawaguchi Chemical Industry Co., LTD., OUCHI SHINKO CHEMICAL INDUSTRIAL CO., LTD., Rhein Chemie Corporation, etc., can be used.

The amount of the vulcanization accelerator per 100 parts by mass of the rubber component is preferably not less than 0.5 parts by mass and more preferably not less than 1 part by mass, and is preferably not greater than 10 parts by mass and more preferably not greater than 5 parts by mass. When the amount is within the above range, the effect tends to be more favorably achieved.

The rubber composition preferably contains stearic acid.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

The amount of the stearic acid per 100 parts by mass of the rubber component is preferably not less than 0.5 parts by mass and more preferably not less than 1 part by mass. In addition, the amount is preferably not greater than 5 parts by mass and more preferably not greater than 3 parts by mass. When the amount is within the above range, the effect tends to be more favorably achieved.

The rubber composition may contain zinc oxide.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass, and is preferably not greater than 10 parts by mass and more preferably not greater than 5 parts by mass. When the amount is within the above range, the effect tends to be more favorably achieved.

The rubber composition may contain an antioxidant.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination. Among them, p-phenylenediamine-based antioxidants and quinoline-based antioxidants are preferable, and p-phenylenediamine-based antioxidants are more preferable.

As the antioxidant, for example, products of Seiko Chemical Co., Ltd., Sumitomo Chemical Co., Ltd., Ouchi Shinko Chemical Industrial Co., Ltd., Flexsys, etc., can be used.

The amount of the antioxidant per 100 parts by mass of the rubber component is preferably not less than 0.5 parts by mass and more preferably not less than 1 part by mass, and is preferably not greater than 10 parts by mass and more preferably not greater than 5 parts by mass. When the amount is within the above range, the effect tends to be more favorably achieved.

The rubber composition may contain a wax.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

The amount of the wax per 100 parts by mass of the rubber component is preferably not less than 0.5 parts by mass and more preferably not less than 1 part by mass. In addition, the amount is preferably not greater than 10 parts by mass and more preferably not greater than 7 parts by mass. When the amount is within the above range, the effect tends to be more favorably achieved.

In addition to the above-described components, additives that are generally used in the tire industry can be blended in the rubber composition, and examples of the additives include vulcanizing agents other than sulfur (for example, organic crosslinking agents and organic peroxides), calcium carbonate, mica such as sericite, aluminum hydroxide, magnesium oxide, magnesium hydroxide, clay, talc, alumina, and titanium oxide. Each of the amounts of these additives per 100 parts by mass of the rubber component is preferably not less than 0.1 parts by mass and preferably not greater than 200 parts by mass.

The rubber composition can be produced, for example, by a method in which the above respective components are kneaded using a rubber kneading device such as an open roll and a Banbury mixer and then vulcanization is performed.

As for the kneading conditions, in a base kneading step of kneading the additives other than a crosslinking agent (vulcanizing agent) and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and is preferably 80 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C.

The rubber composition can be used for tire members such as treads (cap treads), sidewalls, base treads, under treads, clinches, bead apexes, breaker cushion rubbers, carcass cord covering rubbers, insulations, chafers, inner liners, etc., and side reinforcing layers of run flat tires (as a rubber composition for a tire). Among them, the rubber composition is suitably used for treads.

The tire of the present invention is produced by an ordinary method using the above rubber composition. Specifically, a rubber composition containing various additives as necessary is extruded in an unvulcanized state into the shape of each member (particularly, a tread (cap tread)) of a tire, shaped on a tire-shaping machine by a general method, and attached together with other tire members to form an unvulcanized tire. Then, the unvulcanized tire is heated and pressurized in a vulcanizing machine, whereby the tire can be produced.

The tire is not particularly limited, and examples of the tire include pneumatic tires, solid tires, and airless tires. Among them, pneumatic tires are preferable.

The tire is suitably used as a tire for a passenger car, a tire for a large-sized passenger car, a tire for a large-sized SUV, a tire for a truck or a bus, a tire for a motorcycle, a tire for racing, a studless tire (tire for winter), a tire for all seasons, a run flat tire, a tire for an airplane, a mining tire, etc.

### EXAMPLES

The present invention will be specifically described by means of examples, but the present invention is not limited to these examples.

Various chemicals used in examples and comparative examples are collectively described below.
SBR 1: SBR 1 obtained in Production Example 1 described below (oil-extended product [containing 10.0 parts by mass of oil per 100 parts by mass of rubber solids], styrene content: 40.0% by mass)
SBR 2: SBR 2 obtained in Production Example 2 described below (non-oil-extended product, styrene content: 25.0% by mass)
SBR 3: SBR 3 obtained in Production Example 3 described below (non-oil-extended product, styrene content: 10.0% by mass)
BR: modified BR obtained in Production Example 4 described below (cis content: 36% by mass, trans content: 52% by mass, vinyl content: 12% by mass, Mw: 550 thousand)
NR: TSR20
Silica 1: VN3 (N₂SA: 175 m²/g) manufactured by Evonik Industries Ag
Silica 2: ZEOSIL PREMIUM 200MP (N₂SA: 213 m²/g) manufactured by SOLVAY POLAND
Carbon black: N134 (N₂SA: 148 m²/g, DBP: 123 ml/100 g, average particle diameter: 18 nm) manufactured by Cabot Japan K.K.
Resin 1: Sylvatraxx 4401 (styrene-based resin (copolymer of α-methylstyrene and styrene), softening point: 85°C) manufactured by Arizona Chemical Company
Resin 2: NOVARES C10 Resin (liquid coumarone-indene resin, softening point: 10°C) manufactured by Rutgers Chemicals AG
Protected mercaptosilane: NXT (3-octanoylthio-1-propyltriethoxysilane) manufactured by Momentive
Silane coupling agent: Si69 (bis(3-triethoxysilylpropyl)tetrasulfide) manufactured by Evonik Industries Ag
Oil: Vivatec 500 (aromatic process oil (TDAE oil)) manufactured by H&R
Wax: SUNNOC N manufactured by Ouchi Shinko Chemical Industrial Co., Ltd.
Antioxidant: NOCRAC 6C (N-(1,3-dimethylbutyl)-N'-phenyl-p-phenylenediamine) manufactured by Ouchi Shinko Chemical Industrial Co., Ltd.
Zinc oxide: Zinc Oxide No. 1 manufactured by Mitsui Mining & Smelting Co., Ltd.
Stearic acid: stearic acid "Tsubaki" manufactured by NOF Corporation
Sulfur: powdery sulfur manufactured by Tsurumi Chemical Industry Co., Ltd.
Vulcanization accelerator CZ: NOCCELER CZ (N-cyclohexyl-2-benzothiazolyl sulfenamide) manufactured by Ouchi Shinko Chemical Industrial Co., Ltd.
Vulcanization accelerator DPG: SOXINOL D (DPG: N, N'-diphenylguanidine) manufactured by Sumitomo Chemical Co., Ltd.

### (Production Example 1)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, butadiene was added to the reaction solution, and further polymerization was carried out for five minutes. Thereafter, 3-dimethylaminopropyltrimethoxysilane was added as a modifier to the reaction solution, and reaction was carried out for 15 minutes. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain a modified styrene-butadiene rubber (SBR 1). Furthermore, 10.0 parts by mass of an oil (Vivatec 500 (TDAE oil) manufactured by H&R) was added per 100 parts by mass of rubber solids, and the obtained rubber was used as SBR 1.

### (Production Example 2)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, butadiene was added to the reaction solution, and further polymerization was carried out for five minutes. Thereafter, 3-diethylaminopropyltrimethoxysilane was added as a modifier to the reaction solution, and reaction was carried out for 15 minutes. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain a modified styrene-butadiene rubber (SBR 2).

### (Production Example 3)

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, butadiene was added to the reaction solution, and further polymerization was carried out for five minutes. Thereafter, 3-dimethylaminopropyltriethoxysilane was added as a modifier to the reaction solution, and reaction was carried out for 15 minutes. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain a modified styrene-butadiene rubber (SBR 3).

### (Production Example 4)

Under a nitrogen atmosphere, 3-dimethylaminopropyltrimethoxysilane was put into a volumetric flask, and anhydrous hexane was further added to produce a terminal modifier.

n-Hexane, butadiene, and TMEDA were added to a pressure-resistant container sufficiently purged with nitrogen, and the temperature of the mixture was increased to 60°C.

Next, butyllithium was added to the mixture, then the temperature of the mixture was increased to 50°C, and the mixture was stirred for 3 hours. Next, the terminal modifier was added to the mixture, and the mixture was stirred for 30 minutes. Methanol and 2,6-tert-butyl-p-cresol were added to the reaction solution, and then the reaction solution was put into a stainless-steel vessel containing methanol to collect aggregates. The obtained aggregates were dried under reduced pressure for 24 hours to obtain a modified butadiene rubber (BR).

### (Examples and Comparative Examples)

In accordance with each of the blending formulas shown in Table 1, the chemicals other than the sulfur and the vulcanization accelerator were kneaded under a condition of 150°C for 4 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized rubber composition.

The obtained unvulcanized rubber composition was press-vulcanized at 170°C for 10 minutes by using a mold having a thickness of 0.5 mm to obtain a vulcanized rubber composition.

In addition, the obtained unvulcanized rubber composition was extruded into the shape of a tread, and was attached together with other tire members on a tire-shaping machine to form an unvulcanized tire. The unvulcanized tire was vulcanized at 170°C for 10 minutes to obtain a test tire (size: 215/55R16, a tire for a passenger car).

The following evaluations were made by using the obtained vulcanized rubber compositions and test tires. The results are shown in Table 1.

### <Low Fuel Consumption Performance>

Under a condition of 23°C, each test tire was run on a drum at a load of 4.9 N, a tire internal pressure of 200 kPa, and a speed of 80 km/h, and the rolling resistance of the test tire was measured. The results for the respective blending formulas were indexed with the rolling resistance of Comparative Example 1 being regarded as 100. A higher index indicates that the rolling resistance is lower and the low fuel consumption performance is better. When the index was equal to or higher than 80, the result was determined as good.

### <Dry grip performance (steering stability)>

The test tires were mounted to all the wheels of a vehicle (a front wheel drive vehicle with an engine displacement of 2000 cc, produced in Japan), and the vehicle was caused to run on a test course with a dry asphalt road surface. Specifically, the vehicle was caused to run under two conditions: a road surface temperature of 55°C and an air temperature of 30°C (high temperature condition), or a road surface temperature of 15°C and an air temperature of 14°C (low temperature condition). When the vehicle was actually driven, the test driver made sensory evaluation for steering control stability during starting, acceleration, and cornering. In the sensory evaluation, the result of Comparative Example 1 was regarded as 100, a score of 115 was given when the test driver determined that the performance was clearly improved, a score of 130 was given for a good level that had been never seen before, and the results were indexed as overall scores. A higher value indicates that the grip performance on a dry road surface (dry grip performance) is better.

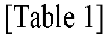

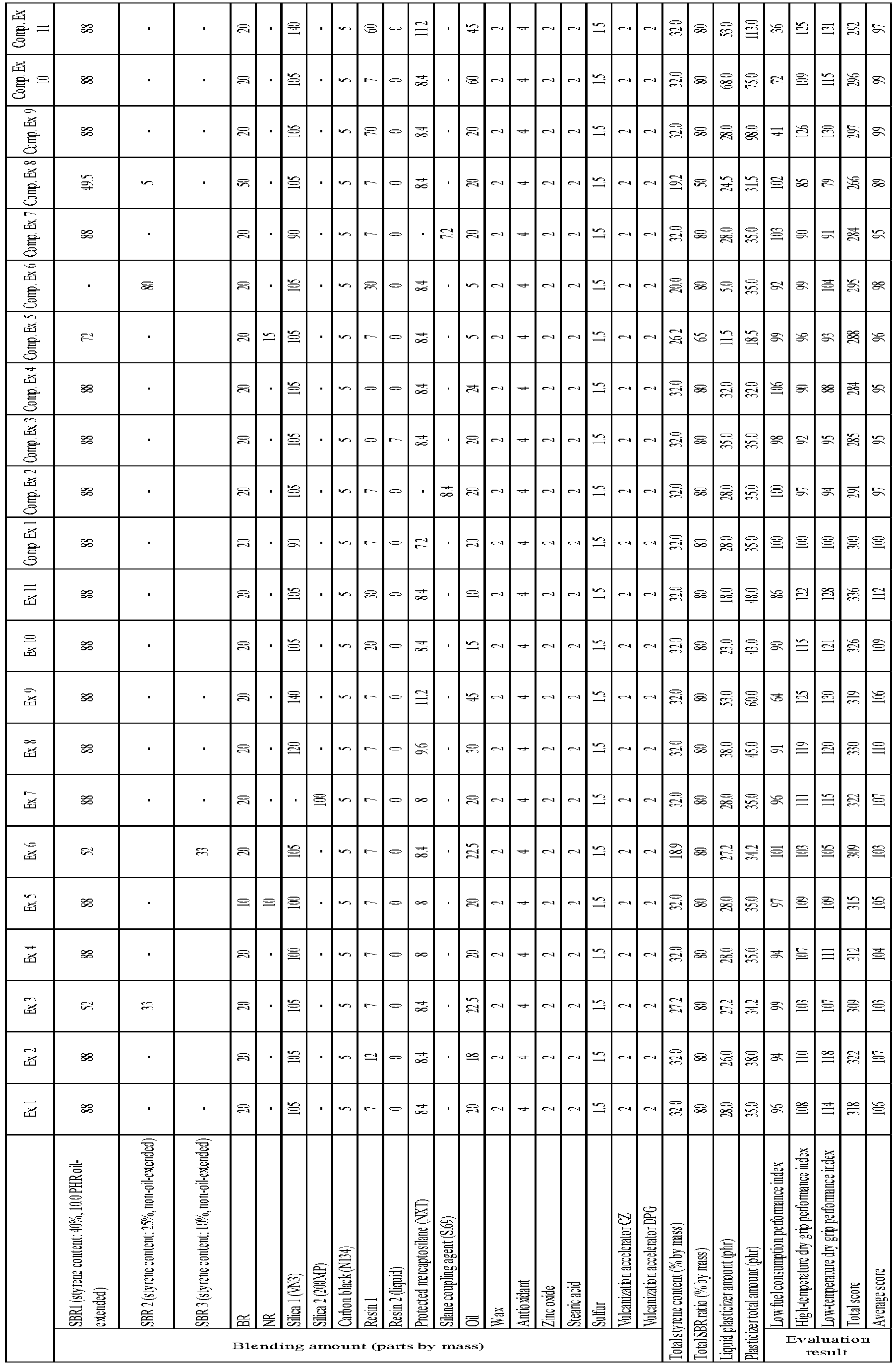

As seen from Table 1, combined performance of low fuel consumption performance, high-temperature dry grip performance, and low-temperature dry grip performance was improved in the Examples each containing: a rubber component including 60% by mass or greater of a styrene-butadiene rubber or a rubber component having a total styrene content not less than 20% by mass; 100 parts by mass or greater of silica per 100 parts by mass of the rubber component; a protected mercaptosilane; 5 to 60 parts by mass of a resin having a softening point not lower than 30°C per 100 parts by mass of the rubber component; and 10 to 55 parts by mass of a liquid plasticizer per 100 parts by mass of the rubber component, wherein a total amount of a plasticizer per 100 parts by mass of the rubber component is 30 to 100 parts by mass.

By comparison between Comparative Examples 1, 2, and 7 and Example 1, it was found that combined performance of low fuel consumption performance, high-temperature dry grip performance, and low-temperature dry grip performance can be synergistically improved by using a large amount of the silica and the protected mercaptosilane in combination.

Provided are a rubber composition and a tire having improved combined performance of low fuel consumption performance, high-temperature dry grip performance, and low-temperature dry grip performance. A rubber composition for a tire tread contains: a rubber component including 60% by mass or greater of a styrene-butadiene rubber or having a total styrene content not less than 20% by mass; 100 parts by mass or greater of silica per 100 parts by mass of the rubber component; a protected mercaptosilane; 5 to 60 parts by mass of a resin having a softening point not lower than 30°C per 100 parts by mass of the rubber component; and 10 to 55 parts by mass of a liquid plasticizer per 100 parts by mass of the rubber component, wherein a total amount of a plasticizer per 100 parts by mass of the rubber component is 30 to 100 parts by mass.

## Claims

1. A rubber composition for a tire tread, containing:
a rubber component including 60% by mass or greater of a styrene-butadiene rubber or a rubber component having a total styrene content not less than 20% by mass;
100 parts by mass or greater of silica per 100 parts by mass of the rubber component;
a protected mercaptosilane;
5 to 60 parts by mass of a resin having a softening point not lower than 30°C per 100 parts by mass of the rubber component; and
10 to 55 parts by mass of a liquid plasticizer per 100 parts by mass of the rubber component, wherein
a total amount of a plasticizer per 100 parts by mass of the rubber component is 30 to 100 parts by mass.

2. The rubber composition for a tire tread according to claim 1, containing a carbon black having an average particle diameter not greater than 20 nm and/or a nitrogen adsorption specific surface area not less than 125 m²/g.

3. The rubber composition for a tire tread according to claim 1 or 2, wherein the silica has a nitrogen adsorption specific surface area not less than 200 m²/g.

4. The rubber composition for a tire tread according to any one of claims 1 to 3, containing a styrene-butadiene rubber having a styrene content not greater than 10% by mass.

5. The rubber composition for a tire tread according to any one of claims 1 to 4, containing a butadiene rubber and an isoprene-based rubber.

6. The rubber composition for a tire tread according to any one of claims 1 to 5, wherein the protected mercaptosilane is a compound represented by the following formula (I), 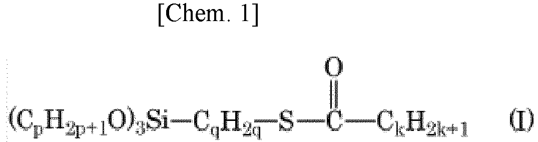 (in formula (I), p is an integer from 1 to 3, q is an integer from 1 to 5, and k is an integer from 5 to 12.).

7. A tire comprising a tread for which the rubber composition according to any one of claims 1 to 6 is used.
